# EUROPEAN PATENT SPECIFICATION

(11) **EP 1 612 996 B1**
(45) Date of publication and mention of the grant of the patent: **01.04.2009**
(21) Application number: 04291679.1
(22) Date of filing: 01.07.2004
(51) Int. Cl.: H04L 12/28, H04L 29/08

(54) **Method for selecting among network interfaces, device with multiple network interfaces and application**
Verfahren zur Auswahl zwischen Netzwerkschnittstellen, Gerät mit mehreren Netzwerkschnittstellen und Verarbeitungsschicht
Méthode pour sélectionner parmi des interfaces réseau, équipement avec de multiples interfaces réseau et application

(43) Date of publication of application: 04.01.2006
(73) Proprietor: Alcatel Lucent, 75008 Paris (FR)
(72) Inventor: Weis, Fréderic, 35400 Saint Malo (FR); Watts, Gregory, 91120 Palaiseau (FR); Skraba, Ryan, 75014 Paris (FR); Banatre, Michel, 35111 La Fresnaie (FR)
(74) Representative: Schmidt, Werner Karl

(56) References cited:
- WO-A-03/065654
- WO-A-20/04031488
- US-A1- 2004 042 437
- US-B1- 6 236 365

## Description

### Field of the Invention

The present invention relates to the field of telecommunications and more particularly to a method for enabling an application for a device with multiple network interfaces to select among network interfaces to transmit its data, a device with multiple network interfaces.

### Background and Prior Art

As the availability of different standards of wireless and wired networks increases and new devices that can profit from multiple networks (so-called "multi-homed" devices) enter the market, it will become increasingly popular for providers to offer their services over these heterogeneous networks. This is primarily relevant for mobile devices, where the network availability frequently changes, such as laptop computers, tablet computers, personal digital assistants (PDA) and GSM (global system for mobile communication) mobile phones with alternative network interfaces, e.g. WLAN (wireless local area network) or Bluetooth in addition to GPRS (general packet radio service).

Many of these devices offer a network layer, where one interface can be activated or deactivated programmatically. Activating and deactivating a network interface programmatically affects all applications on a device and does not provide a fine-grained per-application network selection. One application, for example, should be able to send a small amount of data over a highly reliable, costly network while another application should be able to choose a less expensive, transient network for large transfers.

Another possibility is to use IP(internet protocol)-connected devices offering IP routing tables that can be programmatically modified so that packets can be sent to a specific network interface according to the desired destination. But it is impossible to create a routing table that allows using different networks for the same destination.

If one uses an IP-connected device that provides a socket API (application protocol interface), a particular network interface can be selected by specifying the IP address of the network interface. But IP-connected devices using the socket API have to track changes to their IP addresses as the underlying networks change, and to match them to their network interfaces. In addition, there is a requirement that the IP address exists for the network interface before the application can interact with it.

Mobile phones frequently have a separate API for each available network interface, such as under the Symbian operating system, which uses different system calls for GPRS data transfer and Bluetooth data transfer. While providing different APIs for different network interfaces allows for fine-grained per-application control of interfaces, it involves rewriting the networking component of the application for each interface/API.

WO 2004/031488 A1 discloses a method for smart connection management of a portable device configured to support a plurality of network connection types. A connection detector within the portable device detects network connections that are available to the portable device. Coupled to the connection detector and to a customizable profile storing configuration parameters for each of the network connection types, a connection manager then selects a particular one of the available connections based on user definable selection criteria. The user definable selection criteria may comprise rules or parameters that define the user's preferences in selecting between connection types. These parameters may include, for example, a day of the week parameter, time of the day parameter, location parameter, link quality threshold parameter, access fee limit parameter, time of use limit parameter, an available battery capacity parameter or combinations of the foregoing.

US 2004/0042437 A1 describes a multi-mode interoperable mobile station communications architecture including an application layer, a services layer interfacing the applications layer, a multi-mode layer interfacing the service layer, and a hardware layer interfacing the multi-mode layer. The multi-mode layer includes first and second interoperable radio access technologies. In heterogeneous networks, the mobile station simultaneously monitors cells of the different radio access networks in idle and active modes to perform cell selection and handover procedures, including the bi-directional handoff of radio access bearer services. If no suitable cells are found, an available PLMN (Public Land Mobile Network) list is sent to a radio resource component.

WO 03/065654 A1 describes Internet protocol based wireless communication arrangements. A wireless network driver software architecture is proposed, named Multistandard Wireless Adaptation Layer (MWAL). It is for client devices that may be portable, need to efficiently switch form one wireless standard to another and that must be able to stay connected and reachable in the Internet even when switching between wireless communication standards. The technique is a layer 2 technique, in which the MWAL enables the client device to perform vertical handovers between wireless communications standards. The MWAL exports inter alia a public applications programmer's interface to be used by applications. This interface is defined in terms of commands that can be issued by applications and executed by the MWAL and events that are sent by the MWAL to relevant processes.

### Summary of the invention

It is an object of the present invention to allow for fine-grained per-application network interface selection when using devices with multiple network interfaces. This object, in addition to others, is achieved by means of a method according to claim 1 and a device according to claim 5. Further advantageous features of this invention are indicated in the dependent claims. All the claims are understood to be integral parts of the description.

By providing an interface according to the invention, it is possible for the network layer to make different network interfaces available to an application. The network layer is one of several layers of a protocol stack. It provides the functional and procedural means of transferring variable length data sequences from a source to a destination via one or more networks. In particular, the network layer addresses messages and translates logical addresses and names into physical addresses. Other layers of a protocol stack are e.g. the physical layer defining the electrical and physical specifications for devices, or the application layer performing common application services for the application. Protocol stacks are described in more detail for example in the Open Interconnection System (OSI) Reference Model.

One of the main advantages of the new interface is that it is independent of the specific network interface to be used for transmitting data. The interface according to the invention allows for a lot of flexibility in selecting the network interface. The application gets information on network interface availability and can consider further parameters such as data size, priority, cost, transmission speed etc. to select a specific network interface. Via the interface, the application then submits the selected network as parameter to the network layer. With this information, the network layer can establish a connection using the selected network interface.

### Brief description of the drawings

A detailed description of the invention is provided below. Said description is provided by way of a non-limiting example to be read with reference to the attached drawings in which:
- Fig.1: schematically shows the concept of data transmission;
- Fig.2: schematically shows the application and the network layer;
- Fig.3: schematically shows a first embodiment of the method according to the invention;
- Fig.4: schematically shows a possibility different from the invention;
- Fig.5: schematically shows a second embodiment of the method according to the invention.

### Detailed Description

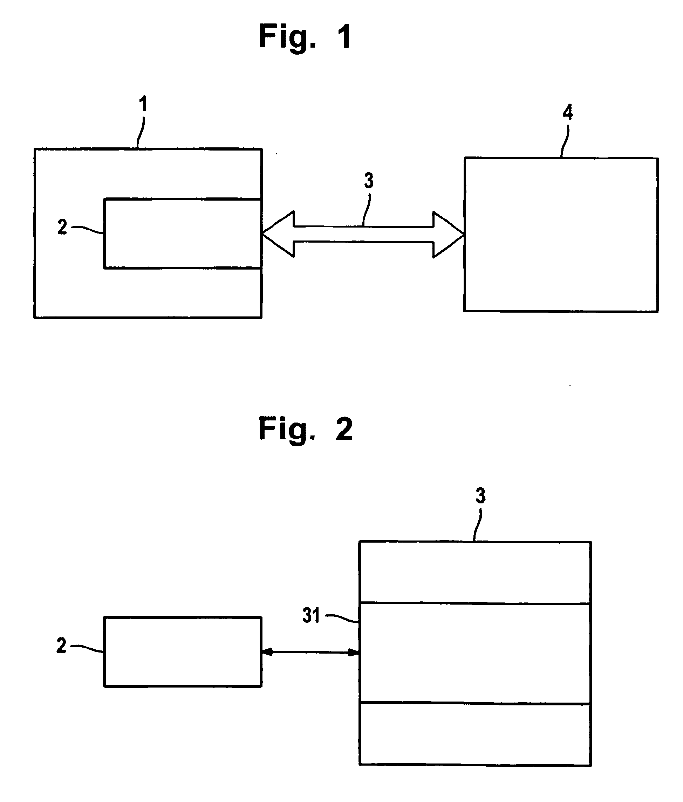

Figure 1 shows schematically a mobile device 1 with an application 2 running on it. To transmit data from the device 1 to a location 4 or vice versa, a protocol 3 is needed to establish a connection over a network, process the data and actually transmit the data. The protocol 3 is implemented partly or totally in the application 2 and/or the device 1 and/or the location 4.

The device 1 could be for example a mobile phone, a laptop, a PDA or a tablet computer. Possible applications 2 could be e.g. sending/receiving SMS (short message service), MMS (multimedia message service), emails, music, synchronizing data etc.. Some generally known protocols are for example http, ftp, telnet, TCP/IP and Ethernet.

In general, one speaks of a protocol stack 3, because an interconnected application can abstractly be described as having a layer design (see Figure 2). In the OSI Reference Model for example, each layer has the property that it only uses the functions of the layer below, and only exports functionality to the layer above. Protocol stacks can be implemented either in hardware or software, or a mixture of both. Typically, only the lower layers are implemented in hardware, the higher layers are implemented in software. One of the stack layers is the network layer 31.

The application 2 has to communicate with the network layer 31 of the protocol 3 to get the necessary information on network interface availability for selecting the network interface to be used for data transmission, and to inform the network layer 31 of the selected network interface in order to get the correct connection established. According to the invention, an appropriate interface (symbolized by the arrow in Figure 2) between application 2 and network layer 31 is provided that allows for submission of the selected network interface from the application 2 to the network layer 31.

In preferred embodiments of the invention, this interface is a Java interface based on usual standards. The virtual machine on the application level and on the network layer level is modified in order to allow the application to submit the selected network interface as parameter and to allow the network layer to accept the selected network interface as parameter. By doing so, the implementation is transparent, i.e. all other functions of the application with the interface according to the invention will run normally with all network layers, other applications will run normally with network layers having this interface, and the application according to the invention with an unadapted network layer, e.g. the interface being only partly implemented on the application side, will generate a defined error message.

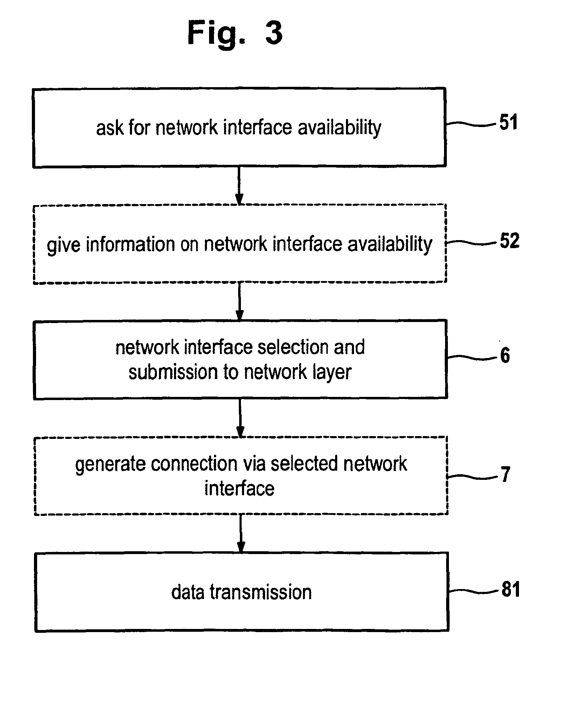

In Figure 3, an example for an embodiment of the method according to the invention is explained more in detail. The actions mainly occurring on the application side are symbolized by a box with a plain line, and the actions occurring mainly on the network layer side are symbolized by a box with a dotted line.

To be able to select a network interface, the application first needs to know, what network interfaces are available. This depends not only of the hardware components of the device on which the application is running, but also on what networks are available. If one considers usual mobile devices, possible networks could be e.g. WLAN, Bluetooth, GSM. One possibility to acquire this necessary information is illustrated in Figure 3. The application can query system properties to find information about the availability of network interfaces (action 51). If one uses a Java interface, it is preferable to use the MIDP 2.0 standard and to query MIDP properties. The network layer answers the query of the application by giving the queried information (action 52).

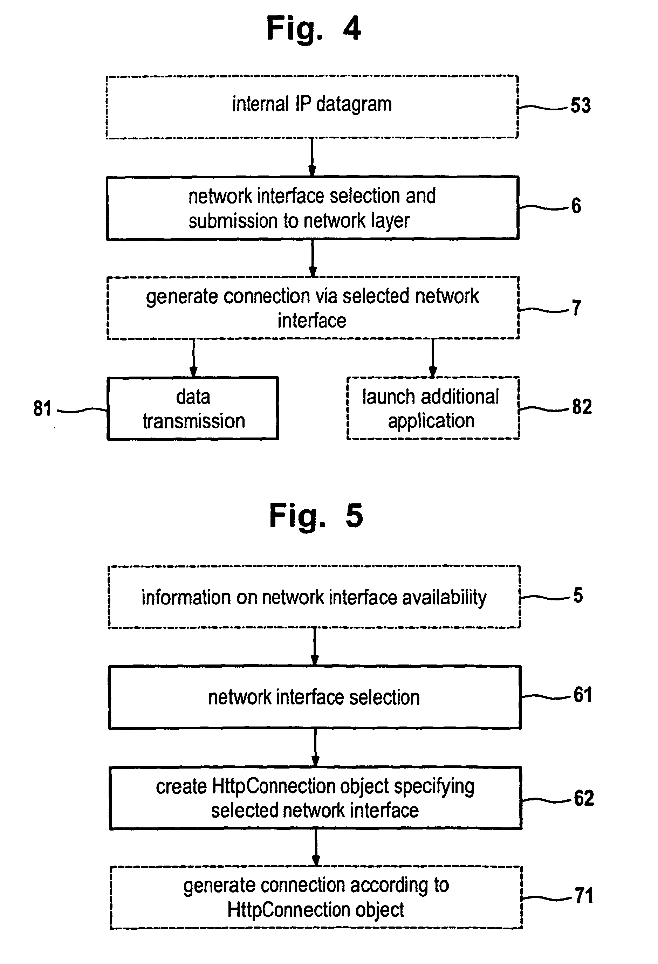

A possibility different from the invention is illustrated in Figure 4. There, the application is notified via IP datagrams on an internal socket (action 53). Because this action is not localized at the application or the network layer, the symbolizing box shows a dash-dotted line. This possibility is advantageous for mobile devices, which frequently deal with changing network availability. By using datagrams, the application may be constantly notified of network changes.

Once the application has been provided with the necessary information on network interface availability, it can proceed with the network interface selection (action 6). Further important selection criteria may be data size, priority, transmission speed, cost etc.. Every application can have its own particular selection criteria and choose different network interfaces for transmitting different data to or from the same location. This ensures that the available network interfaces are always used optimally.

After intelligently choosing the preferred network interface from the available network interfaces, the network layer is notified of the selected network interface (action 6) and generates a connection via this selected interface (action 7) to enable data transmission to or from the application (action 81).

In preferred embodiments, as schematically illustrated in Figure 4, the network layer not only generates a connection via the selected interface (action 7), but also launches an additional application (action 82). Different levels of availability of network interfaces can thus be made accessible to applications. For example, an authentication client could be interested when WLAN media is available, and could launch the authentication of the device to obtain IP connectivity. Subsequent applications would be interested in the network interface when IP connectivity is available. Additional applications may be launched by the first application, too. Applications that are strongly related to the process of connection like authentication clients are preferably launched automatically by the network layer.

Figure 5 shows more in detail an embodiment of the method according to the invention using a Java interface according to the MIDP 2.0 standard between the application and the network layer. The Java MIDP 2.0 environment has the advantage of being highly portable. An implementation of the method according to the invention in this environment makes it applicable to a wide range of devices. In this environment, connections to network services are typically made through a well-defined Java interface called HttpConnection, which takes a URL (universal resource locator) as a parameter. Normally for an URL such as "http://path/to/resource", the protocol (in this case http) is independent of the underlying network interface. Data is sent to the TCP/IP stack, which uses an IP routing table to choose the appropriate network interface.

After having gotten the network availability information either by query and answer (action 5), and after selection of the network interface to be used (action 61), the application generates an object "httpGPRS://path/to/resource" (action 62). Thus, the implementation of the method according to the invention adds functionality to the Java virtual machine such that the protocol of the specified URL may explicitly choose the network interface (in this case GPRS). That is, a HttpConnection using the URL "httpGPRS://path/to/resouce" will always make the network connection over the GPRS interface. Likewise, the same application may specify the URL "httpWiFi://path/to/resource", which would always make the connection over the WLAN interface. After an HttpConnection object is created, the underlying application is completely transparent to the application.

The network layer generates a connection according to the HttpConnection object (action 71). It is responsible for assuring that the correct network interface is used for the protocol specified by the application. It is important to note that the Java standard, like MIDP 2.0 is extended without breaking it. Thus, existing applications that are compatible with the Java Standard can be easily modified to include the features of the present invention.

The method according to the invention offers fine-grained, per-application control over the selection of the network interface, but retains the transparency of the network interface after it has been selected. Accordingly, applications can be written and devices can be constructed to take advantage of this exchange of information on network interface availability and selected network interface implementing the method as software and/or hardware and, thus, provide a flexible and responsive service to the user, especially of mobile devices.

The invention shall be illustrated more vividly in a further example concerning MMS delivery. A portable computer was equipped with multiple network interfaces, i.e. WiFi using a WLAN card and GPRS using a connected mobile phone and/or a wired LAN. An application was written to take advantage of the multiple network interfaces. Specifically, the user was offered the capability to compose an MMS and send it immediately over GPRS, or to wait until the terminal entered a WLAN hotspot. Likewise, on receiving a MMS notification, the user could either immediately download it and, in this case, prefer WLAN connectivity if it exists over the more expensive and slower GPRS, or wait until the terminal entered a WLAN hotspot. This offers the user more options and responsiveness from their terminal, which should translate to increased usage of the service and increased revenue for the service provider.

## Claims

1. A method for enabling an application (2) for a device (1) with multiple network interfaces to select among network interfaces to transmit its data, by providing an interface between the application (2) and the network layer (31) of a protocol stack (3) for
- providing information on network interface availability to the application (2);
- selecting the network interface by the application (2);
- submitting the selected network interface as parameter to the network layer (31), wherein the information on network interface availability is provided by the application layer querying (51) information from the network layer.

2. The method of claim 1 wherein the interface between the application (2) and the network layer (31) is a Java interface.

3. The method of claim 1 wherein an object containing information on the protocol and the network interface is generated by the application (2) for submitting the selected network interface as parameter to the network layer (31).

4. The method of claim 1 further comprising the step of calling (82) an additional application on the network layer level.

5. A device (1) with multiple network interfaces **characterized in that** it comprises means (2, 3, 31)for the implementation of the method of any one of claims 1 to 4.

6. The device of claim 5 **characterized in that** the device (1) is mobile.

## Patentansprüche

1. Ein Verfahren zum Befähigen einer Verarbeitungsschicht (2) für eine Vorrichtung (1) mit mehreren Netzwerkschnittstellen, zwischen Netwerkschnittstellen zu wählen, um ihre Daten zu übertragen, durch Bereitstellen einer Schnittstelle zwischen der Verarbeitungsschicht (2) und der Netzwerkschicht (31) eines Protokollstapels (3) zum:
- Bereitstellen von Informationen über die Netzwerkschnittstellen-Verfügbarkeit an die Verarbeitungsschicht (2);
- Auswählen der Netzwerkschnittstelle durch die Verarbeitungsschicht (2)
- Senden der ausgewählten Netzwerkschnittstelle als Parameter an die Netzwerkschicht (31),
wobei die Informationen über die Netzwerkschnittstellen-Verfügbarkeit von der Verarbeitungsschicht-Anfrageinformation (51) von der Netzwerkschicht bereitgestellt wird.

2. Das Verfahren nach Anspruch 1, wobei die Schnittstelle zwischen der Verarbeitungsschicht (2) und der Netzwerkschicht (31) eine Java-Schnittstelle ist.

3. Das Verfahren nach Anspruch 1, wobei ein Objekt enthaltende Information über das Protokoll und die Netzwerkschnittstelle von der Verarbeitungsschicht (2) erzeugt wird, um die ausgewählte Netzwerkschnittstelle als Parameter an die Netzwerkschicht (31) zu senden.

4. Das Verfahren nach Anspruch 1, weiterhin umfassend den Schritt des Aufrufens (82) einer zusätzlichen Verarbeitungsschicht auf der Netzwerkschicht-Ebene.

5. Eine Vorrichtung (1) mit mehreren Netzwerkschnittstellen, **dadurch gekennzeichnet, dass** sie Mittel (2, 3, 31) für das Implementieren des Verfahrens gemäß einem beliebigen der Ansprüche 1 bis 4 umfasst.

6. Die Vorrichtung nach Anspruch 5, **dadurch gekennzeichnet, dass** die Vorrichtung (1) ein Mobilgerät ist.

## Revendications

1. Procédé pour activer une application (2) pour un dispositif (1) avec plusieurs interfaces réseau à sélectionner parmi des interfaces réseau pour transmettre ses données, en fournissant une interface entre l'application (2) et la couche réseau (31) d'une pile de protocoles (3) pour
- fournir des informations sur la disponibilité des interfaces réseau à l'application (2) ;
- faire sélectionner l'interface réseau par l'application (2) ;
- soumettre l'interface réseau sélectionnée comme paramètre à la couche réseau (31), les informations sur la disponibilité des interfaces réseau étant fournies par la couche application demandant (51) les informations à la couche réseau.

2. Procédé selon la revendication 1, dans lequel l'interface entre l'application (2) et la couche réseau (31) est une interface Java.

3. Procédé selon la revendication 1, dans lequel un objet contenant des informations sur le protocole et l'interface réseau est généré par l'application (2) pour soumettre l'interface réseau sélectionnée comme paramètre à la couche réseau (31).

4. Procédé selon la revendication 1, comprenant en outre l'étape consistant à appeler (82) une application supplémentaire au niveau de la couche réseau.

5. Dispositif (1) avec plusieurs interfaces réseau, **caractérisé en ce qu'**il comprend des moyens (2, 3, 31) pour la mise en oeuvre du procédé selon l'une quelconque des revendications 1 à 4.

6. Dispositif selon la revendication 5, **caractérisé en ce que** le dispositif (1) est mobile.
